# EUROPÄISCHE PATENTANMELDUNG

(11) **EP 3 967 539 A1**
(43) Veröffentlichungstag der Anmeldung: **16.03.2022**
(21) Anmeldenummer: 20209991.7
(22) Anmeldetag: 26.11.2020
(51) Int. Cl.: B60K 37/06

(54) **STEUERUNGSSYSTEM FUER FAHRZEUG**

(30) Priorität: 10.09.2020 CH 11322020
(71) Anmelder: Bozzio AG, 2560 Nidau (CH)
(72) Erfinder: Schütz, Daniel, 3270 Aarberg (CH); Schnider, Simon, 3084 Wabern (CH); von Kaenel, Marc, 3011 Bern (CH)
(74) Vertreter: P&TS SA (AG, Ltd.)

(57) **Zusammenfassung**

Die Erfindung betrifft ein nachträglich in ein Fahrzeug einbaubares Eingabemodul (140) zur Steuerung eines Fahrzeugs mit einem haptischen Eingabeelement (100), mindestens einem Sensor (200), mindestens einem Elektronikschaltkreis (350), der ein Sensorsignal bestimmen kann, ein Kraftrückkopplungselement (400), und ein Gehäuse (57) mit mindestens einer elektrischen Schnittstelle (35). Der Sensor (200), der Elektronikschaltkreis (350) und das Kraftrückkopplungselement (400) sind vollständig in dem Gehäuse (57) untergebracht und das Eingabeelement (100) ist teilweise in dem Gehäuse (57) untergebracht. Die Erfindung betrifft auch ein modulares Steuerungssystem (13) mit dem oben angeführten Eingabemodul (140), einem Datenbus (77a, 77b) und mindestens einem zentralen Verteilermodul (300a, 300b).

## Beschreibung

### Technisches Gebiet

Die Erfindung bezieht sich auf ein Steuerungssystem, welches keine mechanische Verbindung zwischen Eingabeeinheit und Rädern aufweist, ein sogenanntes «*drive by wire*» System. Insbesondere bezieht sich die Erfindung auf ein Steuerungssystem mit einem aktiven und dynamischen Kraftrückkopplungselement.

### Stand der Technik

Aus dem Stand der Technik sind verschiedene Ansätze bekannt, in denen Steuerungswünsche mittels alternativer Eingabeelemente an das Fahrzeug übermittelt werden, ohne dass konventionelle Fahrzeugsteuerungselemente, wie zum Beispiel Lenkrad, Bremspedal und/oder Gaspedal direkt vom Fahrer betätigt werden müssen. So kann beispielsweise ein Lenkwunsch anhand eines Joysticks anstelle des Lenkrads, oder ein Brems- und/oder Beschleunigungswunsch anhand eines händisch betätigten Eingabeelements anstelle eines Fusspedals eingegeben werden.

Es ist weiterhin aus dem Stand der Technik bekannt, dass Rückkopplungssysteme, sogenannte Force-Feedback-Systeme, eingesetzt werden können, um fahrdynamisch relevante Informationen, beispielsweise bezüglich Lenkkraft oder Bremspunkt, an den Fahrer zurückzuleiten. Die Rückmeldung wird üblicherweise mechanisch über Feder-/ Dämpfersysteme oder hydraulisch generiert. Dies hat den Nachteil, dass die Rückkopplung nicht dynamisch ausgestaltet werden kann. Derartige Systeme können beispielsweise keine geschwindigkeitsabhängige, positionsabhängige und/oder kraftabhängige Rückmeldung generieren. Zudem erfordert eine individuelle Anpassung des Rückkopplungssystems eine physische Modifikation des Eingabemodules, was in der Praxis aufwändig ist.

EP2214945 B1 beschreibt ein behindertengerechtes Fahrzeug, das mit einem Lenk- und Bremseingabemodul ausgestattet ist, wobei verschiedene angepasste Eingabeeinheit austauschbar an dem Modul angebracht werden können. Zu diesem Zweck ist eine mechanische Schnittstelle zwischen Eingabeeinheit und Rückkopplungseinheit vorgesehen, mittels derer Eingabeeinheiten entsprechend den Wünschen des Benutzers ausgetauscht werden können. Dies ermöglicht zwar eine einfache und raschen Anpassung des Steuerungssystems an Benutzer mit unterschiedlichen körperlichen Behinderungen und Bedürfnissen, andererseits stellt die mechanische Schnittstelle zwischen Eingabeeinheit und Rückkopplungseinheit Nachteile in Sachen Platzbedarf und Ästhetik dar.

US2018312193 A1 beschreibt ein Steuerungsmodul mit einem Eingabeelement, das einen Sensor zur Positionsbestimmung des Eingabeelementes aufweist, und mit einem redundanten Servomechanismus, der auf das Eingabeelement rückkoppelt. In dieser Erfindung werden die Sensorsignale von einem Steuerungsmodul über eine elektrische Schnittstelle an eine separate Kontrolleinheit zur Berechnung der Rückkopplungsmeldung transferiert. Die Berechnung der Rückmeldung in der Kontrolleinheit erfolgt somit ausserhalb des Steuerungsmoduls.

US2004140145 A1 beschreibt eine Fahrzeugfahrersteuerungseingangsanordnung umfassend einen Sitz mit einer Lenkradstruktur, die konfiguriert ist, um nichtmechanische Lenksignale an ein *steer by wire* System zu liefern. Die Lenkradstruktur ist zur Aufbewahrung unter dem Sitz zusammenklappbar. Eine Vielzahl von wählbaren Fahrersteuereingabevorrichtungen kann austauschbar mit dem Fahrzeug verbunden sein, um dem Fahrzeug nach Wunsch Lenk-, Brems- und / oder Beschleunigungssignale bereitzustellen.

US5553684 A beschreibt ein ferngesteuertes System zum Betätigen der Beschleunigungs- und Bremspedale eines Fahrzeugs, wobei eine begrenzte physikalische Eingabe in die gewünschte Fahrzeugbeschleunigung und -bremsung übersetzt wird. Optional ist ein Bedienelement, das ein Joystick oder Hebel ist, mit einem Rückkopplungsmechanismus verbunden, der es dem Fahrer ermöglicht, den bei Bewegung des Hebels empfundenen Widerstand einzustellen. Die Rückkopplung basiert auf einer passiven mechanischen Springfeder mit Hydrauliköldämpfern. Diese passive Rückkopplung kann nicht auf fahrdynamische Umstände, wie zum Beispiel auf die aktuelle Geschwindigkeit des Fahrzeugs, angepasst werden.

DE19912169 A1 beschreibt ein System mit einer elektronisch geregelten Lenksteuervorrichtung am Lenkgetriebe oder an beiden gelenkten Vorderrädern, einem Lenkradsensor, der die Lenkanforderung des Fahrers erfasst, und eine Rückkopplungsaktuatoreinheit, die die Straßenrückmeldung an den Fahrer über das Lenkrad weiterleitet. Der Lenkbedarf des Fahrers wird entsprechend der fahrdynamischen Parameter angepasst. Das Rückkopplungsstellglied enthält eine Lenkradsteuervorrichtung, die über ein Getriebe und einen Lenkradregler mit dem Lenkrad gekoppelt ist. Das System sieht keine Eingabegeräte vor. Die Lenkung erfolgt weiterhin mit einem klassischen Lenkrad und die Rückkopplungsaktuatorik ist in der Lenksäule untergebracht.

US2005274563 A1 beschreibt ein Joystick-gesteuertes Fahrsystem, wobei Beschleunigungs- und Bremsfunktionen vom Fahrer mittels des Joysticks bedient werden und die Lenkfunktion weiterhin mit dem Lenkrad des Fahrzeugs ausgeführt wird. Zwei unabhängige Aktoren bedienen mechanisch die Pedale. Die Bremse ist redundant ausgeführt.

US4627522 A beschreibt einen Handbetätigungsmechanismus für eine Fahrzeugmotordrossel und -bremse mit einem handbetätigten Eingangshebel. Die Beschleunigung wird über einen Kabelzug realisiert, die Bremse über ein Gestänge. Das System weist keinen Rückmeldemechanismus auf.

EP1595766 beschreibt eine Vorrichtung zum Betätigen der Lenkung in Kraftfahrzeugen. Die Vorrichtung weist eine mechanische Einheit zum Betätigen des Lenksystems, eine Getriebekupplung zwischen der mechanischen Einheit und einem Positionierrad, ein Bedienelement, einen Positionswandler, und eine Steuereinheit zum Empfand von Lenksignalen auf. Die Vorrichtung ist ausschliesslich zur Bedienung der Lenkung vorgesehen. Andere Funktionen, wie zum Beispiel Bremsen und/oder Beschleunigung, können mittels dieser Vorrichtung nicht betätigt werden.

In der vorliegenden Erfindung soll eine Lösung für eine Steuerungssystem gefunden werden, das effizient und robust ist und die Mängel der Stand der Technik überkommt.

### Darstellung der Erfindung

Es ist ein Ziel der Erfindung, ein Steuerungssystem bereitzustellen, das robust und zuverlässig ist und einfach an die Präferenzen des Fahrers angepasst werden kann.

Vorzugsweise soll das Steuerungssystem einfach und reversibel montierbar sein.

Des Weiteren soll das Steuerungssystem dazu ausgestattet sein, den Steuerungswunsch des Fahrers präzise und zuverlässig an Lenkung, Bremse und/oder Beschleunigung zu übermitteln.

Idealerweise sollen steuerungsrelevante Informationen betreffend Fahrer, und/oder Fahrzeug zur Anpassung der Steuerung miteinbezogen werden können.

Erfindungsgemäss wird dieses Ziel durch die unabhängigen Ansprüche 1 und 8, sowie, vorzugsweise, deren Unteransprüche erreicht.

Spezifisch wird dieses Ziel durch ein nachträglich in ein Fahrzeug einbaubares Eingabemodul zur Steuerung eines Fahrzeugs mit einem haptischen Eingabeelement, mindestens einem Sensor, einem Elektronikschaltkreis, der ein Sensorsignal bestimmen kann, ein Kraftrückkopplungselement, und ein Gehäuse mit einer elektrischen Schnittstelle erreicht. Der Sensor, der Elektronikschaltkreis und das Kraftrückkopplungselement sind vollständig in dem Gehäuse untergebracht und das Eingabeelement ist teilweise in dem Gehäuse untergebracht. Das Eingabemodul liegt somit als integrierte Baueinheit vor.

Des Weiteren wird das Ziel durch ein modulares Steuerungssystem mit dem oben angeführten Eingabemodul, einem Datenbus und einem zentralen Verteilermodul, das dazu geeignet ist, Signale über den Datenbus zu erhalten und an den Datenbus auszugeben, erreicht.

Vorzugsweise weist das modulare Steuerungssystem mehrere redundante elektrische Schnittstellen auf, über die die Elemente des Steuerungssystems und/oder Elemente des Fahrzeugs steuerungsrelevante Signale an den Datenbus eingegeben und/oder über den Datenbus erhalten können.

Um erforderlichen Sicherheitsansprüchen zu entsprechen, weist das Eingabemodul jeweils mehrere, vorzugsweise jeweils zwei, zueinander redundante Sensoren, Elektronikschaltkreise und/oder elektrische Schnittstellen auf. In Analogie liegen auch der Datenbus und das zentrale Verteilermodul in sich redundant, das heisst jeweils in mehrfacher, vorzugsweise zweifacher, Ausführung vor.

Diese redundanten Elemente des Steuerungssystems können zusätzlich jeweils in sich redundant, beispielsweise zweistrangig, sein. Ein Element ist in sich redundant ausgeführt, wenn es elektrische Komponenten beinhaltet, die dazu geeignet sind, dieselbe Funktion ihrer jeweils redundanten Komponente auszuführen. Sofern ein Element jeweils zwei redundante Komponenten aufweist, ist es zweistrangig ausgeführt. In dieser Ausführung liegen zwei voneinander unabhängige Stränge vor. Die beiden Stränge sind fähig miteinander zu kommunizieren. Aus Sicherheitsgründen liegen vorzugsweise alle Komponenten, deren Fehlfunktion einen Ausfall des jeweiligen Elementes verursacht, zumindest zweifach vor. Die Konsequenz eines Ausfalls ist es, dass ein aktives Element die ihm zugeordneten Funktionen nicht mehr ausüben kann.

Man kann demnach von einer doppelten Redundanz sprechen, in der besagte Elemente einerseits in sich zweistrangig ausgeführt sind, und andererseits in zumindest zweifacher Ausführung vorliegen.

Sollte sich ein Strang eines in sich redundanten Elementes als fehlerhaft erweisen, ist dieser Strang dazu fähig, sich selbst automatisch abzuschalten. Wenn der fehlerhafte Strang abgeschaltet ist, übernimmt der andere Strang des redundanten Elementes alleine die Funktion des Elements. Diese Konstellation trägt wesentlich zur Sicherheit des Gesamtsystems bei.

Optional kann das modulare Steuerungssystem eine oder mehrere zusätzliche digitale Schnittstellen aufweisen, mittels derer steuerungsrelevante Signale an den Datenbus eingegeben werden können. Vorzugsweise kann diese digitale Schnittstelle auch Signale aus dem Datenbus abrufen. Aus Sicherheitsgründen ist die digitale Schnittstelle vorzugsweise redundant ausgeführt.

Besagte digitale Schnittstelle kann beispielsweise eine autonome Steuerung des Fahrzeuges ermöglichen.

Vorzugsweise bewirkt ein auf den Datenbus zugreifender Übersteuerungsschalter, auch «*override switch*» genannt, dass die über die digitale Schnittstelle eingelesenen Signale ignoriert werden. In diesem Fall werden die Steuerungsfunktionen des Fahrzeuges wieder von den Eingabemodulen übernommen. Optional ist es auch möglich, dass beim Betätigen des Übersteuerungsschalters die Aktoren stromlos geschaltet werden und somit die digitale Schnittstelle als auch die Eingabemodule einflusslos sind. Die Steuerung des Fahrzeuges erfolgt in einem solchen Falle über das konventionelle Lenkrad und die originalen Gas- und Bremspedale. Diese Konfiguration ist insbesondere bei autonomen Fahrzeugen mit Sicherheitsfahrer oder Fahrschulfahrzeuge mit Fahrlehrer von Vorteil um jederzeit die Steuerung des Fahrzeuges übernehmen und übergeben zu können.

Das in seinem Gehäuse vorgelegte Eingabemodul und/oder die Systemsteuerung kann einfach nachträglich im Fahrzeug eingebaut werden. Der Ausdruck "nachträglich eingebaut" bedeutet in diesem Zusammenhang, dass das Eingabemodul und/oder die Systemsteuerung jederzeit nach der Fertigstellung des Fahrzeuges in der Produktionslinie eingebaut werden kann. Der Einbau kann entweder direkt im Anschluss an das Produktionsverfahren oder auch zu einem späteren Zeitpunkt vorgenommen werden. Der Einbau des Eingabemoduls und/oder des Steuerungssystems muss demnach nicht im Produktionsverfahren des Fahrzeuges vorgesehen werden. Auch müssen die nachrüstbaren Fahrzeuge nicht mit spezifisch zur Anbringung des Eingabemoduls und/oder des Steuerungssystems vorgesehenen Elementen ausgerüstet sein.

Die nachrüstbaren Fahrzeuge können auch ohne diese nachträglich montierbaren Komponenten gefahren werden. Das heisst, dass ein in ein Fahrzeug eingebautes Eingabemodul und/oder Steuerungssystem aus dem Fahrzeug entfernt werden kann und dass das Fahrzeug nach dem Entfernen wieder herkömmlich gefahren werden kann.

Insbesondere werden Eingabemodul und/oder Elemente des Steuerungssystems als nachträglich einbaubar betrachtet, wenn diese geeignet sind, zusätzlich zu den konventionellen, fahrzeugeigenen Elementen im fertiggestellten Fahrzeug nach dessen Fertigstellung eingebaut zu werden.

Basierend auf der physischen Integration des Eingabemoduls innerhalb des Gehäuses, sind der Sensor, das Kraftrückkopplungselement, der Elektronikschaltkreis sowie deren Verbindung zueinander im Wesentlichen unzugänglich. Im Wesentlichen unzugänglich bedeutet in diesem Zusammenhang, dass das Gehäuse mit geeigneten Werkzeugen demontiert werden muss, um einen Zugriff zu besagten Elementen zu ermöglichen. Das schützende Gehäuse trägt zur Robustheit des gesamten Eingabemoduls bei.

In diesem Sinne wird ein Eingabemodul als zum nachträglichen Einbau als in ein Fahrzeug vorgesehen betrachtet, wenn dieses Modul über eine mechanische und/oder elektrische Schnittstelle verfügt, um diesen nachträglichen Einbau zu ermöglichen.

Die Berechnung der Sensorsignale wird prinzipiell im Elektronikschaltkreis des Eingabemoduls durchgeführt.

Das Eingabemodul steht über vorzugsweise doppelt-redundante elektrische Schnittstellen mit dem vorzugsweise redundant-ausgeführten Datenbus, beispielsweise einen CAN-Bus, in Verbindung. Die im Elektronikschaltkreis berechneten Signale können somit an den Datenbus ausgegeben werden. Andererseits kann der Elektronikschaltkreis auch über besagte elektrische Schnittstellen Signale von anderen, an den Datenbus angeschlossenen Elementen einlesen. Zu diesen anderen Elementen, die an den Datenbus angeschlossen sind, zählen beispielsweise das zentrale Verteilermodul, Aktuatoren, ein elektronisches Beschleunigungsmodul, die fahrzeugeigene Elektronik, und/oder andere Elemente, die an den Datenbus angeschlossen sind.

Sensorsignale werden basierend auf der Betätigung des Eingabeelementes erzeugt und im Elektronikschaltkreis berechnet. Optional können zusätzliche über den Datenbus erhaltene Signale in die Berechnung miteinbezogen werden.

Diese Signale können einerseits an einen elektrischen Kraftrückkopplungsmotor des Eingabemoduls, der dadurch dynamisch angepasst wird, übertragen werden.

Die Signale können andererseits auch in den Datenbus eingespeist werden und daraufhin über elektrische Schnittstellen von angeschlossenen Elementen, wie zum Beispiel dem zentralen Verteilermodul, von Aktuatoren, vom elektronischen Beschleunigungsmodul und/oder von der Fahrzeugelektronik abgerufen werden.

Die Signalübertragung geschieht im Steuerungssystem vorzugsweise ausschliesslich elektronisch ohne mechanische Rückfallebene. Es liegt also eine sogenannte «*drive by wire*» Steuerung vor. Die bevorzugte doppelt-redundante Ausführung des Steuerungssystems, beziehungsweise seiner steuerungs-relevanten Elemente, trägt wesentlich zur Sicherheit und Zuverlässigkeit der Funktion bei.

Die Hauptfunktion des zentralen Verteilermoduls besteht darin, eine koordinierte interne Signalübertragung zwischen den an den Datenbus angeschlossenen Elementen zu gewährleisten. Das Verteilermodul sorgt dafür, dass die Signale an das richtige Element übertragen werden.

Das Verteilermodul kann ebenfalls als Schnittstelle nach aussen dienen. Das heisst, es dient in diesem Fall der externen Signalübertragung, die entweder verkabelt über einen Datenbus oder kabellos (*«wireless»*) erfolgen kann.

Steuerungsrelevante Signale werden beispielsweise von Eingabemodul, Aktuatoren und/oder von fahrzeugeigenen Elementen in den Datenbus eingespeist. Diese Signale übermitteln Informationen bezüglich des Fahrers, des Steuerungssystems und des Fahrzeugs, die zur Berechnung der Einstellungsparameter vorzugsweise durch den Elektronikschaltkreis dienen.

Einstellungsparameter des Eingabemoduls können festgelegt werden, um die Auslenkung, beziehungsweise die Ausrichtung und/oder die Bewegung der konventionellen, fahrzeugeigenen Steuerungselemente, wie beispielsweise Lenkrad, Lenksäule und/oder Bremspedal anzupassen.

Die berechneten steuerungs-relevanten Signale können über den Datenbus beispielsweise an die Elektronik eines Aktuators übermittelt werden. Andererseits können berechnete Signale über den Datenbus auch an ein elektronisches Beschleunigungsmodul, das mit dem Motorsteuergerät in Verbindung steht, übertragen werden. Das Beschleunigungsmodul ist vorzugsweise nicht redundant ausgeführt. Es ist auch möglich, dass Signale über den Datenbus an die fahrzeugeigene Elektronik übertragen werden. Die eignet sich beispielsweise zur Kontrolle der Sekundärfunktionen, wie zum Beispiel Licht, Blinker, Horn, Scheibenwischer.

Die berechneten Signale dienen auch zur Anpassung des Rückkopplungsmotors des Eingabemoduls. Da der Elektronikschaltkreis einerseits Sensorsignale zur Kontrolle steuerungsrelevanten Elemente an den Datenbus ausgibt und andererseits Signale, die von Aktuatoren, Fahrzeugelektronik und/oder einem elektronischen Beschleunigungsmodul an das Datenbus ausgegeben werden, erhält und diese zur Parametrisierung der Kraftrückkopplung verwendet, liegt hier ein geschlossener Regelkreis, ein sogenannter «*closed loop*» vor. Im Wesentlichen kontrolliert der Elektronikschaltkreis somit die Steuerungselemente und verwendet deren Rückmeldungen zur Bestimmung der Kraftrückkopplung, die auf das Eingabeelement ausgeübt wird.

Die Kraftrückkopplung beruht auf einem elektrischen Rückmeldemechanismus, vorzugsweise auf einen elektrischen Rückkopplungsmotor. Idealerweise kann die Kraftrückkopplung eingestellt, beispielsweise ein- und ausgeschaltet werden.

Ein elektrischer Kraftrückkopplungsmechanismus hat den Vorteil, dass die Rückkopplungsstärke dynamisch angepasst werden kann. So kann beispielsweise die elektrische Kraftrückkopplung der die Lenkfunktion entsprechend der Geschwindigkeit des Fahrzeugs angepasst werden. Beispielsweise kann die Kraftrückkopplung so programmiert werden, dass die Kraftrückkopplung auf das Eingabeelement, das beispielsweise ein Lenkelement ist, bei höheren Fahrgeschwindigkeiten erhöht ist. Der Fahrer erfährt in diesem Fall eine erhöhte Resistenz in der Bewegung des Lenkelementes, verglichen mit einem statischen oder sich langsam, beispielsweise im Schritttempo, bewegenden Fahrzeugs.

Es kann aber auch die erforderliche Auslenkung einer Bewegung, das für ein erwünschtes Steuerresultat nötig ist, geschwindigkeitsabhängig angepasst werden.

Beispielsweise muss für die gleiche Richtungsänderung des Fahrzeuges bei hoher Geschwindigkeit eine kleinere Auslenkung, beziehungsweise, je nach Typ des Eingabeelements, ein grösserer Druck oder eine grössere Kraft ausgeübt werden, als im statischen Zustand des Fahrzeugs, oder während einer tiefen Fahrzeuggeschwindigkeit, wie zum Beispiel während des Einparkens.

Es ist allerdings auch möglich Parameter zur Signalbestimmung zu hinterlegen. Beispielsweise können so bestimmte Fahrer-spezifische Wünsche, wie allgemeines Fahrverhalten oder auch körperliche Eigenschaften des Fahrers, und/oder Fahrzeug-spezifische Informationen in die Berechnung des Signals miteingebracht werden. Körperliche Eigenschaften des Fahrers können unter anderem seine physischen Fähigkeiten, wie die Bandbreite der physischen Stärke, oder seine Reaktionsgeschwindigkeit sein.

Die Berechnung des Rückkopplungssignals im Elektronikschaltkreis kann demnach auf dynamisch eingelesenen Informationen in Kombination mit hinterlegten Parametern basieren.

Das Eingabeelement ist nur teilweise in dem Gehäuse untergebracht, wobei die zur Betätigung vorgesehene haptische Portion des Eingabeelements aus dem Gehäuse herausragt. Diese Anordnung erlaubt es dem Benutzer, das Eingabeelement zur Steuerung des Fahrzeugs zu betätigen. Die Kontaktstelle zwischen Benutzer und Steuerungsmodul liegt somit ausserhalb des Gehäuses. Optional kann die haptische Portion des Eingabeelementes austauschbar angebracht sein. Die Verbindungsstelle zwischen der reversibel anbringbaren haptischen Portion und dem Rest des Eingabeelementes befindet sich in diesem Fall für den Fahrer zugänglich am Gehäuse oder ausserhalb des Gehäuses, sodass ein Austausch der haptischen Portion ohne grösseren Aufwand vorgenommen werden kann.

Die Ausführung des Eingabeelements kann in Abhängigkeit der auszuführenden Steuerungsfunktion, wie zum Beispiel Lenken, Bremsen und/oder Beschleunigen, passend gewählt werden. Eine Reihe von Ausführungen von haptischen Eingabeelementen sind aus dem Stand der Technik bekannt und werden hier nicht spezifisch angeführt.

Zusätzliche Eingabeelemente können auch zur Betätigung von Sekundärfunktionen, wie zum Beispiel Licht, Blinker, Scheibenwischer, Horn oder andere Funktionen, im Eingabemodul vorgesehen sein.

Um die Kontrolle mehrerer Steuerungsfunktionen zu trennen, ist es möglich, mehrere Eingabemodule mit verschiedenen Funktionen, in das Fahrzeug einzubauen. Beispielsweise kann die Lenkfunktion mit einem Minilenkrad in ergonomisch günstiger Position zur Bedienung mit der rechten Hand des sitzenden Fahrers angebracht sein, während beispielsweise ein kombiniertes Gas-/Bremsmodul zur ergonomisch günstigen Betätigung mit der linken Hand des Fahrers positioniert sein kann. Allerdings können auch Lenk-/Gas-/und Bremsfunktionen in einem einzigen Eingabemodul, beispielsweise einem Vier-Wege Joystick, kombiniert werden.

Des Weiteren können nicht sicherheitsrelevante Zusatzfunktionen des Fahrers auch mittels eines Sensorbildschirms, einem Touchscreen, eingegeben werden. Die Erfindung ist allerdings nicht auf diese spezifischen Eingabemodi limitiert. Andere vorteilhafte Ausführungen der Eingabeelemente sind denkbar und möglich.

Für die Beschleunigungsfunktion werden die im Eingabemodul erzeugten Signale über den Datenbus an das elektronische Beschleunigungsmodul übertragen. Das fahrzeugeigene Motorsteuergerät erhält die berechneten Signale durch das Beschleunigungsmodul und kontrolliert den Fahrzeugmotor. Das konventionelle Gaspedal des Fahrzeugs ist in demnach inaktiv, wenn das Steuerungssystem zur Kontrolle des Beschleunigungsfunktion aktiviert ist. Im ausgeschalteten Zustand des Steuerungssystems ist das konventionelle Gaspedal des Fahrzeugs wiederum aktiv.

Um Fehlfunktionen auszuschliessen, ist das zweistrangige Steuerungssystem in einer sogenannten *"fail operational architecture"* ausgeführt. Die in sich redundanten Elemente des Steuerungssystems können integrierte Eigendiagnosen durchführen, welche Unzulässigkeiten erkennen und einen fehlerhaften Strang eines Elementes sicher abschalten. Der andere Strang dieses Elementes ist dazu ausgestattet, die relevante Funktion des Elementes alleine auszuführen.

Die erfassten Unzulässigkeiten können sodann dem Fahrer, beispielsweise optisch und/oder akustisch, mitgeteilt werden. Zu diesem Zweck ist das Steuerungssystem vorzugsweise mit einem akustischen und optischen Statusmodul, wie zum Beispiel einer Fehlerlampe und einem Signalton, einem sogenannten "Beeper", ausgestattet.

Wahlweise kann eine diagnostische Schnittstelle an den Datenbus angeschlossen werden, um den Benutzer des Steuerungssystems beispielsweise über den aktuellen Status und/oder über steuerungsrelevante Informationen auf dem Laufenden zu halten. Der Benutzer kann der Fahrer, der das Fahrzeug kontrolliert, oder auch eine andere Person, die das Fahrzeug und/oder das Steuerungssystem überwacht, sein. Diese Schnittstelle kann auch dazu verwendet werden, Software updates aufzuspielen und / oder Log Einträge hochzuladen. Die diagnostische Schnittstelle kann über Kabel (*wired*) oder *wireless* erfolgen.

In Analogie zum Eingabemodul ist auch das gesamte Steuerungssystem geeignet nachträglich in ein Fahrzeug mit einem Verbrennungsmotor, mit einem elektrischen Motor oder mit einem Hybridmotor montiert zu werden.

Nach Einbau des Steuerungssystems kann das Fahrzeug wählbar entweder konventionell, das heisst unabhängig von dem Steuerungssystem, oder auch mit Hilfe des montierten Steuerungssystems gefahren werden.

Das Steuerungssystem kann zu einem späteren Zeitpunkt weiter ausgebaut werden, wobei die fahrzeugeigenen Steuerungsfunktionen des Fahrzeugs unbeeinträchtigt bleiben.

Vorzugsweise kann das Steuerungssystem nach Wunsch ein- und ausgeschaltet werden. Dies ist beispielsweise von Vorteil, wenn ein Fahrzeug abwechselnd von einer behinderten Person und von einer körperlich nicht beeinträchtigten Person gefahren wird. Beim Fahrerwechsel muss das Steuerungssystem nicht ein- oder ausgebaut werden, sondern kann einfach den Bedürfnissen des Fahrers entsprechend ein- oder ausgeschaltet werden. Ein rascher Fahrerwechsel, beispielsweise auf langen Fahrtstrecken, kann demnach unkompliziert und ohne grösseren Aufwand erfolgen.

Das Steuerungssystem kann optional auch mit einem unterstützenden Betriebsmodus, einem *Power Assisted Steering* (PAS) ausgestattet sein. Dieser Betriebsmodus kann unerwünschte Eigenschaften des Steuerungssystems, die auf die die Lenkung einwirken, kompensieren. Solche unerwünschte, vom Steuerungssystem verursachte Eigenschaften sind beispielsweise erhöhte Reibungen. Die notwendige Kompensation wird mittels eines PAS Algorithmus berechnet und mittels des Lenkaktuators an das Lenkrad übermittelt. Der PAS Algorithmus wird vorzugsweise ohne Drehmomentsensor realisiert; optional kann jedoch einen entsprechenden redundanten Sensor im Lenkaktuator verwendet werden. Vorzugsweise kann das PAS wählbar ein- und ausgeschalten werden.

### Kurze Beschreibung der Figuren

Die Erfindung wird anhand der beigefügten Figuren näher erläutert, wobei zeigen
Figuren 1a und 1b eine schematische Übersicht eines Ausführungsbeispiels des Steuerungssystems, mit
   1a einer schematischen Darstellung des Eingabemoduls, und
   1b einer schematischen Darstellung eines Ausführungsbeispiels des Steuerungssystems;
Figur 2a und 2b eine schematische Ansicht eines Ausführungsbeispiels eines Lenkeingabemoduls mit Ministeuerrad, mit
   2a einer dreidimensionalen Ansicht des Moduls mit Gehäuse, und
   2b einer dreidimensionalen Ansicht des Moduls ohne Gehäuse;
Figur 3 eine schematische Ansicht eines Ausführungsbeispiels eines Beschleunigungs-/Bremseingabemoduls mit Schieber Eingabeelements ohne Gehäuse.

### Wege zur Ausführung der Erfindung

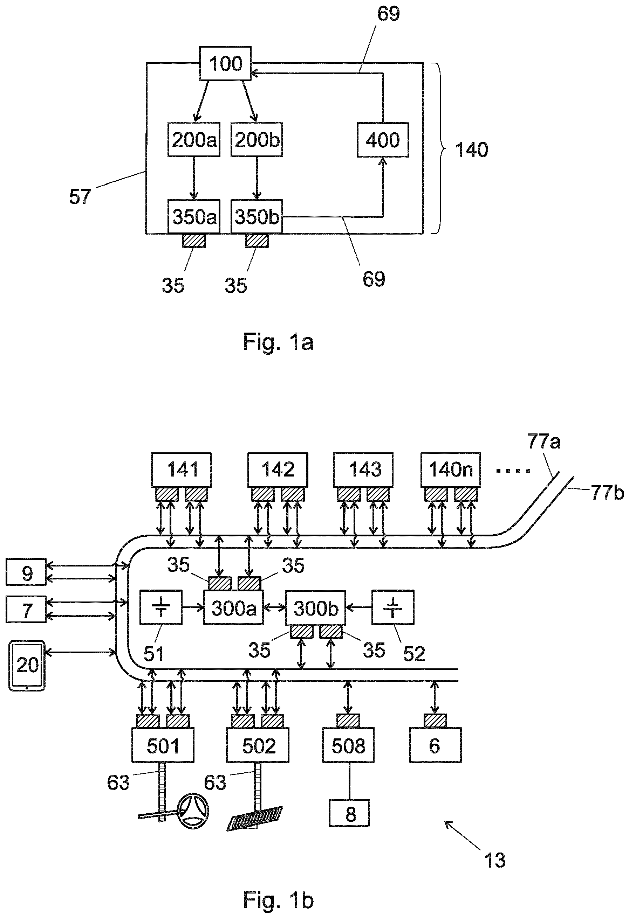

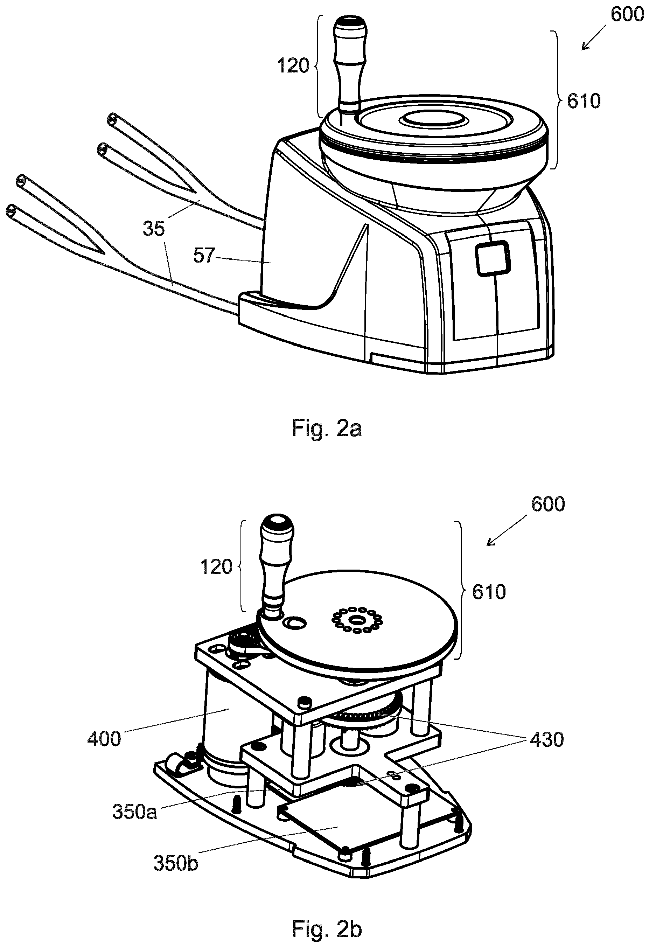

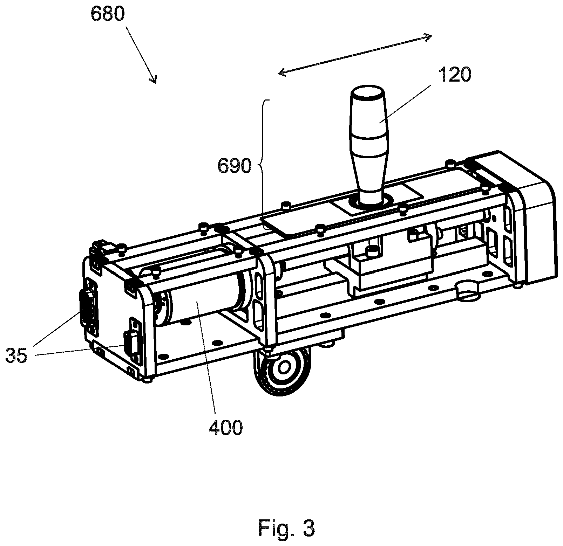

Eine erfindungsgemäss bevorzugtes Ausführungsbeispiel des Steuerungssystems wird im Nachfolgenden anhand der in Figur 1 dargestellten schematischen Systemübersicht beschrieben. Figur 1a ist eine schematische Darstellung eines Eingabemoduls 140 mit Gehäuse 57, in dem ein Eingabeelement 100, zwei redundante Sensoren 200a, 200b, zwei redundante Elektronikschaltkreise 350a, 350b und ein Kraftrückkopplungselement 400 eingelagert sind, wobei ein Teil des Eingabeelements 100, spezifisch die haptische Portion 120 (in Figuren 2 und 3 abgebildet) dieses Elements, aus dem Gehäuse herausragt.

Verschiedene Ausführungsformen dieser haptischen Portion sind möglich und können entsprechend den Vorzügen des Fahrers ausgewählt werden. Haptische Portionen 120 können beispielsweise als Einhandjoystick, Vier-Wege Joystick, Zwei-Wege Joystick, Minilenkrad, Schieber, Motorradlenkstangen, Kipphebel, Knie-hebel, oder in anderen geeigneten Ausführungen vorliegen. Die Erfindung ist nicht auf spezifische haptische Elemente limitiert.

Das Steuerungsmodul 140 ist über zwei redundante elektrische Schnittstellen 35, die sich ausserhalb des Gehäuses befindet, mit einem redundanten Datenbus 77a, 77b, der vorzugsweise ein CAN-Bus ist, verbunden. Der Datenbus 77a, 77b dient zur Signalübertragung zwischen den an ihn angeschlossenen Elementen. Zwei redundante zentrale Verteilermodule 300a, 300b kontrollieren den Signalfluss zwischen den einzelnen an den Datenbus angeschlossenen Elementen. Dies ist in Figur 1b schematisch dargestellt.

Die redundanten Elemente des Eingabesystems, beziehungsweise des in Figur 1b abgebildeten Steuerungssystems, sind in dieser einer bevorzugten Ausführung weiterhin in sich zweistrangig ausgeführt, wodurch eine doppelte Redundanz vorliegt. Zweistrangig heisst, dass die Funktion des redundanten Elementes von einem und/oder einer Kombination elektrischer Elemente, welche den ersten Strang darstellt, sowie auch von einer zweiten elektrischen Komponente, oder einer Kombination von Komponenten, welche den zweiten Strang darstellt ausgeführt werden kann. Die beiden Stränge sind zueinander redundant. Die beiden Stränge sind voneinander unabhängig. Die beiden Stränge sind so ausgebildet, dass sie miteinander kommunizieren können. Diese doppelte Redundanz basierend auf redundanten Elementen, die jeweils zweistrangig vorliegen, trägt wesentlich zur Sicherheit des Systems bei.

Die Bestimmung der Position oder Kraft oder Geschwindigkeit des Eingabeelements 100 erfolgt vorzugsweise mittels optisch-elektrischen redundanter Sensoren 200a, 200b, wobei die Sensoren entweder direkt mit dem Eingabeelement 100, oder über eine mechanische Verbindung, beispielsweise über ein Zahnradriemen Getriebe 430 wie exemplarisch in Figur 2b abgebildet, mit dem Eingabeelement 100 verbunden sein kann. In Abhängigkeit der Sensoren bestimmen die Elektronikschaltkreise 350a, 350b ein Sensorsignal und gibt dieses über die elektrische Schnittstellen 35 and den Datenbus 77a, 77b aus. Das berechnete Signal kann zusätzlich auch an ein elektrisches Kraftrückkopplungselement 400 des Eingabemoduls 140 übertragen werden. Die Elektronikschaltkreise 350a, 350b liegen vorzugsweise in einer Leiterplatte, einem *printed circuit board* («PCB») vor.

Die vom den Elektronikschaltkreisen 350a, 350b and dem Datenbus 77a, 77b ausgegebenen Signale können von Aktuatoren 501, 502 aus dem Datenbus 77a, 77b abgerufen werden. Die Aktuatoren 501, 502 stehen vorzugsweise in direkter mechanischer Verbindung mit dem Lenkrad, der Lenksäule oder dem Bremspedal. Der Aktuator kann ein Lenkaktuator 501 sein, der beispielsweise zwischen dem Lenkrad und der Lenksäule angebracht ist. Ein Bremsaktuator 502, wird vorzugsweise an dem Bremspedalhebel angebracht. Vorzugsweise weisen die Aktuatoren 501, 502 jeweils zwei Motoren auf. Des Weiteren wiesen die Aktuatoren 501, 502 vorzugsweise redundante elektronische Schnittstellen 35 auf, über die Signale an den Datenbus 77a, 77b übertragen und vom Datenbus 77a, 77b empfangen werden können.

Zur Kontrolle der Beschleunigungsfunktion werden vorzugsweise keine Aktuatoren zur Betätigung des Gaspedals verwendet. Stattdessen können Beschleunigungssignale rein elektrisch, analog oder digital, über ein elektronisches Beschleunigungsmodul 508, das an den Datenbus 77a, 77b angeschlossen ist, an das Motorsteuergerät 8 des Fahrzeugs übermittelt werden. Das Gaspedal des Fahrzeuges ist in diesem Fall vollständig von der Signalübermittlung ausgeschlossen.

Signale zur Kontrolle von Sekundärfunktionen, wie zum Beispiel Licht, Blinker, Scheibenwischern und Horn können auch direkt über den Datenbus 77a, 77b an die Fahrzeugelektronik 6 übertragen werden.

Aktuatoren 501, 502 können mit einem elektronischen Motorkontrollelement ausgestattet sein, das vorzugsweise in einer Leiterplatte (PCB) vorliegend ist. Das Motorkontrollelement erzeugt die Leistungselektronik für die Motoren des jeweiligen Aktuators 501, 502. Um elektromagnetische Störung zu vermeiden, ist das Motorkontrollelement in unmittelbarer Nähe des jeweiligen Aktuators 501, 502 positioniert. Vorzugsweise ist das Motorkontrollelement im Fahrzeug verborgen angebracht, beispielsweise hinter dem Armaturenbrett.

Des Weiteren verfügen die Aktuatoren 501, 502 vorzugsweise über eine interne Winkelsensorik, sogenannte «encoder», die Signale bezüglich der Ausrichtung des Steuerungselementes and den Datenbus 77a, 77b überträgt. Diese Signale werden somit an die relevante Stelle, vorzugsweise an den Elektronikschaltkreis 350 des Eingabeelements, übermittelt.

Die Elektronikschaltkreise 350a, 350b sind dazu ausgestattet, Signale über die redundanten elektrischen Schnittstellen 35 zu empfangen und diese Signale in die Berechnung der Rückkopplungsmeldung einerseits und/oder in die Berechnung der Signale für die Steuerung des Fahrzeugs andererseits miteinzubeziehen. Dabei kann der Elektronikschaltkreis über das Datenbus 77a, 77b beispielsweise Signale des Motorsteuergeräts 8, der Fahrzeugelektronik 6 und/oder den Aktuatoren 501, 502 erhalten.

Die Elektronikschaltkreise 350a, 350b sind somit das zentrale Element der Signalrückkopplung zwischen dem Eingabeelement 100 und der fahrzeugeigenen Steuerung. Es liegt hier somit ein geschlossener Regelkreis vor, ein sogenannter «*closed loop*»*,* dessen Signale anhand der Elektronikschaltkreise 350a, 350b bestimmt und angepasst werden.

Die Elektronikschaltkreise 350a, 350b erzeugen ein Rückkopplungssignal und leiten dieses an Kraftrückkopplung 400, vorzugsweise einen Rückkopplungsmotor, des Eingabemoduls 140 weiter. Die Kraftrückkopplung wird beispielsweise mechanisch mittels Zahnriemengetriebe am Eingabeelement 100 ausgeführt.

Die Kraftrückkopplung 400 kann die Betätigung des Eingabeelementes 100 beeinflussen, beispielsweise durch dynamische Veränderung der Kraft, die benötigt wird, um das Eingabeelement zu bewegen.

Die Hauptfunktion der redundanten zentralen Verteilermodule 300a, 300b besteht darin, die interne Signalübertragung zwischen den an den Datenbus 77a, 77b angeschlossenen Elementen zu koordinieren. Das zentrale Verteilermodul 300a, 300b dient als Kommunikationsschnittstelle zwischen den einzelnen Modulen. Es erhält Informationen und/oder Fehlermeldungen der einzelnen Elemente des Steuerungssystems und leitet diese über den Datenbus 77a, 77b weiter.

Vorzugsweise ist das zentrale Verteilermodul 300a, 300b auch dazu ausgestattet, System-spezifische Diagnoseberechnungen durchzuführen.

Allerdings werden Berechnungen im Wesentlichen vor Ort in den relevanten Modulen durchgeführt. Beispielsweise ermittelt ein in den redundanten Batterien 51, 52 vorliegendes Batterie Management System («BMS») den Batteriestand, während die redundanten Elektronikschaltkreise 350a, 350b ein Kraftrückmeldungssignal berechnen. Die redundanten Elektronikschaltkreise 350a, 350b sind ist die primäre Regelintelligenz, die Kraftrückkopplung, Lenkkurven, Bremskurven und/oder andere Steuerungs-relevante Informationen berechnet, parametrisiert und/oder speichert.

Die Modularität des Steuerungssystems 13 basiert im Wesentlichen darauf, dass das Verteilermodul 300a, 300b einerseits die installierte Konfiguration des Eingabemoduls 140, beispielsweise nur Lenken, nur Gas/Bremse, oder alle drei Funktionen, und/oder des Steuerungssystems erkennt und dementsprechend die Informationsübermittlung anpasst. Andererseits erkennt das Verteilermodul 300a, 300b auch alle Module und/oder Elemente, die an den Datenbus 77a, 77b angeschlossen sind.

Des Weiteren dient das zentrale Verteilermodul 300a, 300b auch als Schnittstelle der Signalübertragung nach aussen, das heisst an System externe Elemente. Dies kann entweder über eine Datenbus Schnittstelle oder auch *wireless,* beispielsweise über Bluetooth, erfolgen.

Vorzugsweise werden die beiden Stränge des Steuerungssystems von jeweils einer Batterie 51, 52 gespeist. Die Batterien 51, 52 selbst werden während des Fahrens von der Fahrzeugbatterie gespeist. Das zentrale Verteilermodul 300a, 300b wandelt die Speisespannung des Fahrzeuges in die Systemspannung um und lädt die Batterien 51, 52. Die Batterien 51, 52 sorgen somit für eine konstante Energieversorgung des Steuerungssystems.

Die redundanten Stränge der in sich doppelstrangigen Elemente des Steuerungssystems sind fähig, eigene Unzulässigkeiten zu detektieren. Ein fehlerhafter Strang ist fähig, sich selbst abzuschalten. Die Funktion des in sich redundant ausgeführten Elementes wird sodann von dem zweiten, redundanten Strang allein übernommen.

In dem in Figur 2b und 3 dargestellten Ausführungsbeispiel ist das Kraftrückkopplungselement ein Kraftrückkopplungsmotor. Die Rückkopplung wird hier mittels eines Getriebes 430 an das Eingabeelement 100 übermittelt.

Ein Eingabemodul 140 kann beispielsweise für die Lenkfunktion vorgesehen sein 141. Optional können auch zusätzliche Eingabemodule 140n, beispielsweise zur Kontrolle der Sekundärfunktionen, wie Licht, Blinker, Scheibenwischer, und/oder Horn, vorgesehen sein. Eingabemodule können auch verschiedene Funktionen kombinieren. So kann beispielsweise ein Eingabemodul für die Brems- und Beschleunigungsfunktion 142, oder ein Eingabemodul für die Lenk-, Brems- und Beschleunigungsfunktion 143 eingebaut werden. Andere Kombinationen und Ausführungen sind denkbar und möglich.

Beispielsweise kann ein Vier-Wege-Joystick Eingabemodul (nicht dargestellt) zur kombinierten Betätigung der Lenk-, Brems- und Beschleunigungsfunktionen vorgesehen sein.

Ein Eingabemodul mit einem Schieber Eingabeelement 680, wie in Figur 3 abgebildet, sowohl zur Kontrolle der Fahrzeugbeschleunigung als auch zur Kontrolle des Bremsens betätigt werden. Im dargestellten Ausführungsbeispiel verursacht eine Bewegung des Schiebers nach vorne oder in Fahrtrichtung, eine Beschleunigung des Fahrzeugs. Ein Zurückziehen des Schiebers in die entgegengesetzte Richtung bewirkt, dass ein Signal zum Bremsen des Fahrzeugs erzeugt wird. Diese Funktionalität kann auch invers parametrisiert werden; wobei der Schieber zum Bremsen nach vorne und zum Beschleunigen nach hinten bewegt wird.

Ein oder jedes Eingabeelement 100 ist vorzugsweise mechanisch mit einem entsprechenden Kraftrückkopplungselement 400 verbunden.

Für jedes Eingabeelement 100 liegt vorzugsweise jeweils doppelt-redundante Sensoren 200 und je ein Kraftrückkopplungselement 400 vor. Jedes Kraftrückkopplungselement 400 überträgt eine Kraft an ein ihm zugeordnetes Eingabeelement 100.

Das Kraftrückkopplungselement 400, das Eingabeelement 100 und die Sensoren 200a, 200b sind in demselben Gehäuse 57 eingelagert, wobei eine haptische Portion des Eingabeelementes 120, das in Figuren 2 und 3 ersichtlich ist, zur Bedienung aus dem Gehäuse 57 herausragt.

Steuerungsrelevante Informationen betreffend den Fahrer werden über Eingabemodul 140 in den Datenbus eingegeben. Zusätzlich kann der Fahrer auch steuerungsrelevante Informationen mittels einer vorzugsweise redundanten digitalen Schnittstelle 7 eingeben. Aus Sicherheitsgründen kann die digitale Schnittstelle 7 vorzugsweise mittels eines Übersteuerungsschalters 9 deaktiviert werden, beziehungsweise werden Signale, die über die digitale Schnittstelle 7 eingelesen werden, ignoriert. In diesem Fall werden die Steuerungsfunktionen des Fahrzeuges wieder von den Eingabemodulen 140 übernommen.

Des Weiteren kann auch eine Display Einheit 20 zum Abrufen und zur Eingabe von Sekundärfunktionen an den Datenbus 77a, 77b angeschlossen werden.

Das Steuerungssystem kann auch gemäss Fahrer-spezifischer Informationen, wie zum Beispiel der Fähigkeit eine Kraft auszuüben, Reaktionsgeschwindigkeit, Informationen bezüglich allgemeinem Fahrverhalten des Fahrers, etc, eingestellt werden. Zu diesem Zweck können die Elektronikschaltkreise 350a, 350b entsprechend der erwünschten Anpassung programmiert werden.

Steuerungsrelevante Daten betreffend das Fahrzeug und/oder die Umwelt, werden mittels der Fahrzeugelektronik 6, dem Beschleunigungsmodul 508, und/oder der Aktuatoren 501, 502 an den Datenbus des Steuerungssystems übertragen. In Analogie zu den Fahrerspezifischen Informationen können auch Informationen, die das Fahrzeug oder die Umwelt betreffen direkt in die Elektronikschaltkreise 350a, 350b einprogrammiert werden.

In einer bevorzugten Ausführungsform weist das Steuerungssystem eine diagnostische Schnittstelle, beispielsweise optische und akustische Statusmodule oder einen Bildschirm für System-spezifische Angaben, auf. Die diagnostische Schnittstelle informiert den Benutzer über eventuell aktive Diagnosen im Steuerungssystem. Die diagnostische Schnittstelle ist über den Datenbus mit dem Steuerungssystem verbunden.

Das Steuerungssystem kann durch eine Ein/Aus-Schaltfunktion mittels der Zündung des Fahrzeugs aktiviert und deaktiviert werden.

Weitere redundante Schalter können vorgesehen sein, um das Steuerungssystem im Fahrbetrieb deaktivieren zu können. Dies ist insbesondere dann notwendig, wenn das Steuerungssystem ohne Eingabeelement, also autonom, gefahren wird. Demnach kann die Kontrolle der Steuerungsfunktionen in spezifischen Situationen an einen Sicherheitsfahrer übergeben werden.

Des Weiteren, können auch Schalter für individuelle Elemente von spezifischen Sekundärfunktion, wie beispielsweise Licht, Blinker, Scheibenwischanlage, Horn etc. vorgesehen sein.

Vorzugsweise kann auch lediglich das Kraftrückkopplungselement 400 im aktivierten Steuerungssystem ausgeschaltet werden. Demnach kann der Fahrer entscheiden, ob eine Kraftrückkopplung während der Fahrt erwünscht ist oder nicht.

Ein erheblicher Vorteil des dargelegten Steuerungssystems ist sein modularer Aufbau und die damit einhergehende Austauschbarkeit der einzelnen Module des Systems. Verschiedene Module eines Steuerungssystems können unabhängig voneinander in das Fahrzeug eingebaut werden. Zum einen kann ein Typ eines Eingabemoduls 140, das als eine kompakte Einheit in seinem Gehäuse 57 vorliegt, beliebig ausgewählt und an der Fahrzeuginnenausstattung montiert werden. Des Weiteren werden die redundanten Verteilermodule 300a, 300b eingebaut. Optional können zusätzlich passende Aktuatoren 501, 502 und/oder ein Beschleunigungsmodul 508 im Fahrzeug angebracht werden. Dieser modulare Aufbau erlaubt unter anderem auch Kombinationen von verschiedenen Teilaufgaben, zum Beispiel eine Konfiguration «nur Lenken» oder «nur Beschleunigung /-Bremse».

Die modularen Elemente des Steuerungssystems 13, spezifisch das Eingabemodul 140, die zentralen Verteilermodule 300a, 300b und, optional, die Aktuatoren 501, 502 stehen miteinander und mit der Fahrzeugelektronik 6 über den Datenbus 77a, 77b zum Daten- und Signalaustausch in Verbindung. Über ihre elektrischen Schnittstellen 35 sind Eingabemodul 140, Verteilermodule 300a, 300b und, optional, die Aktuatoren 501, 502 und/oder Beschleunigungsmodul 508 modular an den Datenbus angeschlossen. Die zentralen Verteilermodule 300a, 300b erkennen die angeschlossenen Elemente, beziehungsweise Module und sorgen dafür, dass die Signalübertragung zwischen diesen Elementen und/oder Modulen koordiniert erfolgt. Die zentralen Verteilermodule ermöglichen somit das koordinierte Zusammenspiel des modularen Systems. Sie sind sozusagen die zentrale Verwaltungsstelle der Modularität des Steuerungssystems.

Die modulare Natur des Steuerungssystems 13 erlaubt es, die angeführten Module des Steuerungssystems auszutauschen oder zu ersetzen, ohne dass das Gesamtsystem ersetzt werden muss. Dies ermöglicht eine grosse Flexibilität für die Anpassung eines Fahrzeugs, auch in Bezug auf einfache Wartung im Falle eines notwendigen Austausches im Feld.

Eine Reihe von verschiedenen Ausführungsformen des Eingabemoduls sind denkbar. In Figur 2 ist beispielsweise ein Eingabemodul mit einem rotativen Minilenkrad 610 zur Steuerung der Lenkfunktion des Fahrzeuges dargestellt. Figur 2a zeigt ein Minilenkrad-Modul mit geschlossenem Gehäuse 57. Das horizontal orientierte Minilenkrad 610 wird vom Fahrer mittels der haptischen Portion des Eingabeelements 120, die im dargestellten Beispiel ein Stiftgriff oder «*pin grip*»*,* rotativ bewegt.

Figur 2b zeigt dasselbe Eingabemodul ohne Gehäuse. Die ausgeführten Umdrehungen des Minilenkrads werden im dargelegten Beispiel mittels eines Getriebes 430, an eine auf einer Leiterplatte, einem PCB, vorgelegten redundanten Elektronik 350a, 350b übermittelt. Auf dem PCB sind in diesem Ausführungsbeispiel zwei redundante Sensoren montiert, hier nicht ersichtlich, die die Position des Minilenkrads 610 bestimmen können. Anhand dieser Information ermittelt die elektronischen Elemente 350a, 350b Sensorsignale, welche über in sich redundante elektrische Schnittstellen 35 an den Datenbus 77a, 77b übertragen werden. Des Weiteren übermitteln die Elektronikschaltkreise 350a, 350b Signale an den Rückkopplungsmotor 400. Die Elektronikschaltkreise 350a, 350b kontrollieren somit die Kraftübertragung des Motors 400 an das Eingabeelement, im dargestellten Fall an das Minilenkrad 610.

In Figur 3 ist ein weiteres mögliches Ausführungsbeispiel eines Eingabemoduls 140 abgebildet. Es handelt sich hierbei um einen Schieber-Eingabemodul 680 zur kombinierten Kontrolle von Gas- und Bremsfunktion. Das Eingabemodul ist hier ohne sein Gehäuse abgebildet. Der Schieber 690 kann translational, vorzugsweise in Fahrtrichtung und in die entgegengesetzte Richtung, bewegt werden. Ein Verschieben des Schiebers in Fahrtrichtung kann zur Beschleunigung dienen, während ein Ziehen des Schiebers in die entgegengesetzte Richtung ein Bremsen verursacht. Allerdings können die Funktionen auch den jeweils inversen Bewegungsabläufen zugeordnet werden. Die elektrischen Schnittstellen 35 sowie der Kraftrückkopplungsmotor 400 sind in Figur 3 erkennbar, die Elektronikschaltkreise 350a, 350b ist in dieser Abbildung von einer Abdeckplatte verborgen.

Wie bereits erwähnt umschliesst das Gehäuse 57 des Eingabemoduls 140 die Sensoren 200a, 200b, die Elektronikschaltkreise 350a, 350b, die vorzugsweise in einem PCB vorgelegt sind, das Kraftrückkopplungselement 400 und teilweise auch das Eingabeelement 100. Elektrische sowie mechanische Verbindungsstellen zwischen diesen Elementen sind im Gehäuseinneren eingelagert. Diese Verbindungsstellen sind demnach unzugänglich für den Fahrer. Um Zugang zu besagten Schnittstellen zu verschaffen, muss das Gehäuse 57 mit geeigneten Werkzeugen demontiert werden.

Das Gehäuse 57 ist solide und nicht für eine regelmässige Demontage oder ein regelmässiges Öffnen vorgesehen. Vorzugsweise ist das Gehäuse aus robustem, aber leichtem Material, wie zum Beispiel einem rigiden Polymer.

Ein oder mehrere Eingabemodule 140 werden vorzugsweise in Positionen angebracht, die eine ergonomisch günstige Betätigung des Eingabeelementes 100 durch den Fahrer ermöglichen. Beispielsweise kann ein Eingabeelement für die Lenkfunktion zu Rechten Seite des Fahrersitzes angebracht werden, während ein Eingabeelement für die Brems- und/oder Beschleunigungsfunktion zur linken Seite des Fahrers angebracht werden kann.

## Patentansprüche

1. Eingabemodul (140) zur Steuerung eines Fahrzeugs aufweisend:
- ein haptisches Eingabeelement (120),
- mindestens einen Sensor (200), mindestens einen Elektronikschaltkreis (350), um ein Sensorsignal zu bestimmen,
- ein Kraftrückkopplungselement (400), das auf einem elektrischen Rückkopplungsmechanismus, beispielsweise einem Kraftrückkopplungsmotor basiert,
- ein Gehäuse (57) mit
- mindestens einer elektrischen Schnittstelle (35),
**dadurch gekennzeichnet, dass**
- das Eingabemodul zum nachträglichen Einbau in ein Fahrzeug vorgesehen ist, dass
- der Sensor (200), der Elektronikschaltkreis (350) und das Kraftrückkopplungselement (400) vollständig in dem Gehäuse (57) untergebracht sind, und dass
- das Eingabeelement (100) teilweise in dem Gehäuse untergebracht ist, sodass das Eingabemodul als integrierte Baueinheit vorliegt.

2. Eingabemodul nach Anspruch 1, wobei der Sensor (200), der Elektronikschaltkreis (350) und die elektrische Schnittstelle (35) redundant, vorzugsweise in zweifacher Ausführung, vorliegen und wobei jeder Sensor (200), jeder Elektronikschaltkreis (350) und/oder jede elektrische Schnittstelle (35) vorzugsweise zusätzlich jeweils redundante Komponenten aufweisen.

3. Eingabemodul nach einem der vorigen Ansprüche 1 oder 2, zur Kontrolle von Lenk-, Brems- und /oder Beschleunigungsfunktionen, sowie, optional, zur Kontrolle von Licht, Blinker, Scheibenwischer, und/oder Horn Funktionen.

4. Eingabemodul nach einem der vorigen Ansprüche 1 bis 3, wobei die Berechnung der Kraftrückkopplung im Elektronikschaltkreis (350) erfolgt.

5. Eingabemodul nach einem der vorigen Ansprüche 1 bis 4, wobei der Elektronikschaltkreis (350) das elektrische Kraftrückkopplungselement (400) dynamisch verstellen kann.

6. Eingabemodul nach einem der vorigen Ansprüche 1 bis 5, das mittels des Elektronikschaltkreises (350) parametrisierbar ist.

7. Eingabemodul nach einem der vorigen Ansprüche 1 bis 6, wobei verschiedene Steuerungsfunktionen, beispielsweise Brems- und Beschleunigungs-Funktionen, oder Lenk-, Brems- und Beschleunigungs-Funktionen, mittels desselben Eingabeelements (100) ausgeführt werden können.

8. Ein modulares Steuerungssystem umfassend:
- ein Eingabemodul (140) nach einem der vorigen Ansprüche 1 bis 7,
- einen redundanten Datenbus (77a, 77b), und
- ein zentrales Verteilermodul (300a, 300b), das dazu geeignet ist, Signale über den Datenbus zu erhalten und an den Datenbus auszugeben.

9. Modulares Steuerungssystem nach Anspruch 8, wobei das zentrale Verteilermodul (300a, 300b) redundant, vorzugsweise in zweifacher Ausführung, vorliegt und wobei jedes zentrale Verteilermodul (300a, 300b) vorzugsweise zusätzlich jeweils redundante Komponenten aufweist.

10. Modulares Steuerungssystem nach Ansprüchen 8 oder 9, des Weiteren umfassend eine digitale Schnittstelle (7) zur Übertragung eines steuerungsrelevanten Signals an den Datenbus (77a, 77b).

11. Modulares Steuerungssystem nach einem der Ansprüche 8 bis 10, weiters aufweisend einen Aktuator (501, 502), der mit einem fahrzeugeigenen Steuerungselement, beispielsweise der Lenksäule oder dem Bremspedal, verbunden ist, und/oder ein elektronisches Beschleunigungsmodul (508), das mit dem fahrzeugeigenen Motorsteuergerät (8) verbunden ist.

12. Modulares Steuerungssystem nach einem der Ansprüche 8 bis 11, wobei das zentrale Verteilermodul (300a, 300b) dazu geeignet ist, Signale über den Datenbus (77a, 77b) zu verteilen, sodass besagte Signale vor Ort in den relevanten Modulen, wie zum Beispiel im Elektronikschaltkreis (350) des Eingabemoduls (140), verarbeitet werden können.

13. Modulares Steuerungssystem nach einem der Ansprüche 8 bis 12, welches im aktiven Zustand des Fahrzeuges, beispielsweise während der Fahrt des Fahrzeugs, eingestellt, beziehungsweise ein- und ausgeschaltet werden kann, ohne dass eine mechanische Umkopplung der Aktuatoren (501, 502) und/oder des Beschleunigungsmoduls (508) erforderlich ist.

14. Modulares Steuerungssystem nach einem der Ansprüche 8 bis 13, welches mit einem unterstützenden, optional zusätzliche Sensoren aufweisenden Betriebsmodus ausgestattet ist, der unerwünschte Eigenschaften des Lenkaktuators (501), wie beispielsweise unerwünschte Reibungen, kompensiert und der aktiviert werden kann, wenn das Fahrzeug mittels der fahrzeugeigenen Lenkung gesteuert wird.

15. Modulares Steuerungssystem nach einem der vorigen Ansprüche 8 bis 14, welches nachträglich in das Fahrzeug einbaubar ist.
